# EUROPÄISCHE PATENTSCHRIFT

(11) **EP 1 536 125 B1**
(45) Veröffentlichungstag und Bekanntmachung des Hinweises auf die Patenterteilung: **31.12.2008**
(21) Anmeldenummer: 04027370.8
(22) Anmeldetag: 18.11.2004
(51) Int. Cl.: F02F 3/00, F02F 3/22, F16J 1/09, B23P 15/10

(54) **Kolben mit einem Abdeckelement für einen Kühlkanal**
Piston comprising a closing element for a cooling channel
Piston comprenant un élément de fermeture pour un canal de refroidissement

(30) Priorität: 28.11.2003 DE 10355828
(43) Veröffentlichungstag der Anmeldung: 01.06.2005
(73) Patentinhaber: KS Kolbenschmidt GmbH, 74172 Neckarsulm (DE)
(72) Erfinder: Gniesmer, Volker, 31061 Alfeld (DE); Luz, Gerhard, 74226 Nordheim (DE)
(74) Vertreter: Thul, Hermann

(56) Entgegenhaltungen:
- EP-A- 0 937 888
- DE-A1- 4 039 754
- DE-A1- 10 209 168
- DE-A1- 10 306 115
- DE-A1- 19 621 398
- JP-A- 2000 213 413
- US-A- 5 144 923
- PATENT ABSTRACTS OF JAPAN Bd. 1997, Nr. 06, 30. Juni 1997 (1997-06-30) -& JP 09 042052 A (KOMATSU LTD), 10. Februar 1997 (1997-02-10)
- PATENT ABSTRACTS OF JAPAN Bd. 007, Nr. 165 (M-230), 20. Juli 1983 (1983-07-20) & JP 58 072654 A (NISSAN JIDOSHA KK), 30. April 1983 (1983-04-30)

## Beschreibung

Die Erfindung betrifft einen Kolben für eine Brennkraftmaschine gemäß den Merkmalen der jeweiligen Oberbegriffe der unabhängigen Patentansprüche.

Aus der gattungsbildenden DE 102 09 168 A1 ist ein Kolben mit Kühlkanal für eine Brennkraftmaschine bekannt. Dieser Kolben besteht aus einem Oberteil, das wiederum ein Ringfeld, eine Brennraummulde und eine radial hinter dem Ringfeld verlaufende Ausnehmung aufweist. Unterhalb des Kolbenoberteiles ist ein Kolbenunterteil angefügt, das Zylinderlaufflächen sowie zurückgesetzte Flächen, die Bolzenbohrungen aufweisen, aufweisen. Das Kolbenoberteil und das Kolbenunterteil werden über korrespondierende Flächen zusammengefügt, wobei als Fügeverfahren hier ein Reibschweißen in Betracht kommt. Die radial hinter dem Ringfeld verlaufende Ausnehmung ist zunächst nach unten (in Richtung des Kolbenunterteiles) offen, so dass zwischen der Unterkante des Ringfeldes und der Oberkante der Zylinderlaufflächen bzw. der zurückversetzten Flächen ein radial umlaufender Spalt vorhanden ist. Auf Grund der konstruktiven Geometrie des Kolbenoberteiles mit seiner Brennraummulde und dem Kolbenunterteil ist es möglich, vom Innenbereich des Kolbens her die Fügestelle zu bearbeiten, insbesondere abzudrehen und zu härten. Gleiches gilt für die von außen zugängliche Fügestelle, die über den radial umlaufenden Spalt zwischen Unterkante des Ringfeldes und Oberkante des Kolbenunterteiles zugänglich ist. Erst nachdem die Fügestellen von innen und außen bearbeitet worden sind, erfolgt der Verschluss der radial umlaufenden Ausnehmung in dem Kolbenoberteil, um so einen Kühlkanal zu bilden. Durch den Kühlkanal zirkuliert beim späteren Betrieb des Kolbens in der Brennkraftmaschine in an sich bekannter Weise ein Kühlmedium, welches den Kolben kühlt.

Die Herstellung eines solchen Kolbens aus zwei getrennt voneinander fertigbaren und anschließend zusammenfügbaren Kolbenteilen (Oberteil und Unterteil) hat sich in der Praxis bewährt, da jedes Teil des Kolbens für sich genommen hinsichtlich seiner Geometrie und seiner Festigkeit optimiert gefertigt werden kann. Dabei ist grundsätzlich ein radial umlaufender Spalt vorzusehen, um die Fügestelle gerade von außen bearbeiten zu können. Die Zweiteiligkeit hat aber auch den entscheidenden Vorteil, dass mit Herstellung des Kolbenoberteiles eine radial umlaufende Ausnehmung mit ausreichendem Querschnitt eingebracht werden kann, so dass die für den Betrieb des Kolbens erforderliche Kühlleistung realisiert werden kann.

Im Gegensatz hierzu hat sich das in der DE 102 09 168 A1 gezeigte und beschriebene Abdeckelement für den Verschluss der radial umlaufenden Ausnehmung zwar auch bewährt, aber auch als verbesserungsfähig herausgestellt, da ein solches im Querschnitt U-förmiges Abdeckelement für die Serienherstellung von Kolben nicht unbedingt von Vorteil ist.

Die DE 4 039 754 A1 zeigt einen Kolben für eine Brennkraftmaschine, bestehend aus einem Ringfeld und einem eine umlaufende Ausnehmung aufweisenden Kolbenoberteil sowie Zylinderlaufflächen und Bolzenbohrungen aufweisenden Kolbenunterteil, wobei die Ausnehmung mit einem ein- oder mehrteiligen Abdeckelement zur Bildung eines Kühlkanales verschlossen wird, wobei das Abdeckelement zumindest zweiteilig und als Federelement ausgebildet ist, das zum Verschluss der Ausnehmung in dem Kolben eingeklemmt wird. Dabei wird nach dem Einklemmvorgang das Abdeckelement in etwa planparallel zu der Oberfläche des Kolbenoberteiles zwischen der Unterkante des Ringfeldes und dem Innenbereich des Kolbenoberteiles eingeklemmt.

Die US-A-5144923 zeigt einen Kolbenkopf eines Pendelschaftkolbens, der einen Kühlkanal aufweist, der von einem Abdeckelement verschlossen ist. Dabei erfolgt der Verschluss des Kühlkanales mit dem Abdeckelement ebenso in etwa planparallel zu der Oberfläche des Kolbenkopfes, wozu das Abdeckelement zwischen der Unterkante des Ringfeldes und dem Innenbereich des Kolbenkopfes eingeklemmt wird. Der Einklemmvorgang erfolgt dadurch, dass das Abdeckelement in seiner Ausgangsposition eine Aufweitung aufweist, die mittels eines Werkzeuges zusammengedrückt wird. Danach wird das Abdeckelement in diesem zusammengedrückten Zustand über dem Schaftbereich des Kolbenkopfes geschoben und kommt in Höhe der Unterkante des Ringfeldes an entsprechenden Stufen an der Unterkante des Ringfeldes sowie im Innenbereich des Kolbenkopfes zur Anlage, wenn das Werkzeug entfernt wird und sich das Abdeckelement dadurch wieder aufweitet.

EP0937888 und JP2000213413 offenbaren Abdeckringe, die zur Bildung eines Kühlkanals in eine Ringnut des Kolbens eingelegt werden. Durch thermisches Spritzen werden die Radialnuten danach vollständing aufgefüllt.

Der Erfindung liegt daher die Aufgabe zugrunde, für einen Kolben mit einem Kühlkanal die Abdeckung der radial umlaufenden Ausnehmung zur Bildung des Kühlkanals zu verbessern.

Diese Aufgabe ist durch die Merkmale der unabhängigen Patentansprüche gelöst.

Erfindungsgemäß sieht eine erste Lösung vor, dass das Abdeckelement zumindest zweiteilig und als Federelement ausgebildet ist, das zum Verschluss der Ausnehmung in dem Kolben eingeklemmt wird, wobei das Abdeckelement streifenförmig ausgebildet ist und nach dem Einklemmvorgang zwischen der unteren Kante des Kolbenoberteiles und der oberen Kante des Kolbenunterteiles angeordnet ist. Nach dem Zusammenfügen von Kolbenoberteil und Kolbenunterteil entsteht der radial umlaufende Spalt, in den das mindestens zweiteilige Federelement eingeklemmt und so dieser Spalt zur Bildung des Kühlkanals verschlossen wird. Auf Grund der Klemmwirkung kann eine unlösbare Verbindung des Abdeckelementes mit dem Kolben entbehrlich sein, wohingegen eine zumindest punkt- bzw. abschnittsweise oder vollständige unlösbare Verbindung des Abdeckelementes mit dem Kolben nicht ausgeschlossen ist. Auf Grund der Klemmwirkung des Federelementes in dem radial umlaufenden Spalt lässt sich somit die Herstellung des Kolbens, insbesondere bei einer Serienproduktion, beschleunigen.

Eine weitere Lösung sieht ein Verfahren zur Herstellung eines Kolben vor, wobei das Abdeckelement als einteiliger Blechstreifen ausgebildet ist, der an einem Startpunkt am Kolben fixiert und dann durch eine Drehbewegung aufgewickelt und löslich verbunden wird, was zum Verschluss der radial umlaufenden Ausnehmung führt. Das Abdeckelement kann in vorteilhafter Weise kostengünstig und einfach als einteiliger Blechstreifen hergestellt werden. Nach dieser Herstellung wird der Blechstreifen z.B. mit seinem einen Ende an dem Kolben im Bereich des radial umlaufenden Spaltes fixiert, z.B. durch eine Punktschweißung, und dann dergestalt eine Drehbewegung (z.B. des Kolbens oder des Blechstreifens) durchgeführt, so dass der Blechstreifen aufgewickelt wird und den radial umlaufenden Spalt zur Bildung des Kühlkanals verschließt. Zur Lagefixierung des Blechstreifens an dem Kolben ist weiterhin vorgesehen, dass der Blechstreifen an seinem Stoßpunkt (wo die beiden Enden des Blechstreifens zusammentreffen) und/oder zumindest teilweise (punktuelle, abschnittsweise, vollständig) am Kolben, insbesondere an der Unterkante des Ringfeldes und/oder der Oberkante des Kolbenunterteils) unlösbar verbunden werden.

Eine weitere Lösung sieht ein Verfahren zur Herstellung eines Kolbens vor, wobei das Abdeckelement zumindest zweiteilig und streifenförmig ausgebildet ist, wobei die zumindest zwei Teile des Abdeckelementes von außen an dem Kolben, wieder insbesondere an der Unterkante des Ringfeldes und der Oberkante des Kolbenunterteiles, angefügt werden. Auch hier kommen wieder punktuelle, abschnittsweise oder vollständig radial umlaufende Schweißverbindungen in Betracht, die nach Ausführung des Schweißvorganges überarbeitet werden können.

Eine weitere Lösung sieht ein Verfahren zur Herstellung eines Kolbens vor, wobei das Abdeckelement einteilig und elastisch verformbar ausgebildet ist, so dass es durch Aufweitung über den Kolben bewegt und durch anschließendes Zusammenziehen zum Verschluss der Ausnehmung am Kolben lagefixiert wird. Nachdem Kolbenoberteil und Kolbenunterteil zusammengefügt worden sind, kann das elastisch verformbare Abdeckelement durch radiales Aufweiten beispielsweise über das Kolbenoberteil in Richtung des radial umlaufenden Spaltes geschoben werden und sich, wenn es dort angekommen ist, zusammenziehen, um so diesen Spalt zur Bildung des Kühlkanals zu verschließen. Hierzu besteht das elastisch verformbare Abdeckelement aus einem Material, welches zunächst das Aufweiten und Zusammenziehen gestattet. Wenn das elastisch verformbare Abdecketement nach dem Zusammenziehen in seiner Lage fixiert ist, weist das Material des Abdeckelementes form- und hitzebeständige Eigenschaften auf, so dass es den Einsatzbedingungen beim Betrieb des Kolbens (insbesondere hinsichtlich der herrschenden Temperaturen und deren Veränderungen) dauerhaft standhält.

In den weiteren Unteransprüchen sind weitere vorteilhafte Konstruktionen hinsichtlich der Ausführung des Kolbens bzw. seiner Details angegeben.

Verschiedene Ausführungsbeispiele der erfindungsgemäßen Lösungen, auf die diese jedoch nicht beschränkt sind, sind im Folgenden beschrieben und anhand der Figuren erläutert.

Es zeigen:
- Figuren 1 - 3:: verschiedene Ansichten eines Kolbens mit einem als Federelement ausgebildeten Abdeckelement,
- Figur 4:: einen Kolben, bei dem die radial umlaufende Ausnehmung mit einem einteiligen Blechstreifen mittels einer Drehbewegung fixiert wird,
- Figuren 5 u.6:: einen Kolben, bei dem die radial umlaufende Ausnehmung mittels eines zumindest zweigeteilten streifenförmigen Abdeckelementes verschlossen wird,
- Figuren 8 - 10:: verschiedene Ausgestaltungen eines elastisch verformbaren Abdeckelementes,
- Figur 11:: einen nicht erfindungsgemäßen Kolben mit einem U-förmigen Abdeckelement,
- Figuren 12 - 15:: eine weitere Bauform eines Kolbens mit verschiedenen Abdeckelementen.

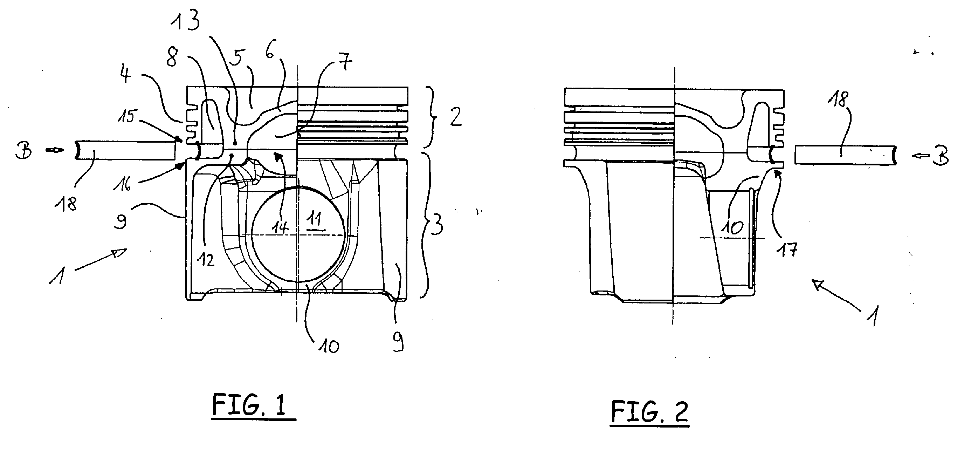

Die Figuren 1 und 2 zeigen eine erste Bauform eines Kolbens 1, der aus einem Kolbenoberteil 2 und einem Kolbenunterteil 3 besteht, die beide separat voneinander herstellbar sind. Nach deren Herstellung und Bearbeitung werden die beiden Teile 2, 3 zusammengefügt, so dass sich in besonders vorteilhafter Weise ein einteiliger Kolben ergibt, wobei die Erfindung jedoch nicht auf solche einteiligen Kolben beschränkt ist, sondern auch auf andere Bauformen (wie insbesondere Pendelschaftkolben) anwendbar ist.

Bei der Konstruktion des Kolbens 1 weist das Kolbenoberteil 2 in an sich bekannter Weise ein Ringfeld 4 und eine Brennraummulde 5 auf. Zur Realisierung der Brennraummulde 5 ist eine gewölbte Ebene 6 vorhanden, so dass sich darunter ein Innenbereich 7 des Kolbens 1 ergibt. Weiterhin ist hinter dem Ringfeld 4 radial umlaufend , eine Ausnehmung 8 vorhanden, die bei dieser Konstruktion nach unten (in Richtung des Kolbenunterteils 3) offen ist. Diese Ausnehmung 8 wird beispielsweise mittels spanabhebender Bearbeitung in das Kolbenoberteil 2 eingebracht. Allerdings sind auch Ausnehmungen möglich, die radial nach außen offen sind.

Das Kolbenunterteil 3 weist einen Schaftbereich auf, der gebildet wird durch zwei im Wesentlichen gegenüberliegende Zylinderlaufflächen 9, die durch zurückgesetzte Flächen 10 (so genannte Kastenbauform) miteinander verbunden sind. In den zurückgesetzten Flächen 10 sind die Bolzenbohrungen 11 zur Aufnahme des Kolbenbolzens (der hier nicht dargestellt ist) eingebracht. Um das Kolbenoberteil 2 mit dem Kolbenunterteil 3 nach deren Herstellung miteinander verbinden zu können, weist einerseits das Kolbenunterteil 3 einen in Richtung des Kolbenoberteils 2 gerichteten umlaufenden Steg 12 auf, während das Kolbenoberteil 2 einen in Richtung des Kolbenunterteils 3 weisenden radial umlaufenden Steg 13 aufweist, wobei dann in einer Verbindungsebene 14 ein Zusammenfügen der beiden Teile 2, 3 über die Flächen der Stege 12, 13 erfolgt, wobei dieses Zusammenfügen in besonders vorteilhafter Weise durch Schweißen, insbesondere durch Reibschweißen erfolgt. Dabei ist die Lage der Verbindungsebene 14 so gewählt, dass sie etwa mittig zwischen einer Unterkante 15 des Ringfeldes 4 und einer Oberkante 16 des Kolbenunterteils 3, insbesondere die Oberkante der Zylinderlaufflächen 9 und der zurückgesetzten Flächen 10 und deren Übergangsbereiche, liegt. Dies hat den Vorteil, dass die Fügestelle nach dem Fügevorgang von innen aus dem Innenbereich 7 und auch von außen über den sich zwischen der Unterkante 15 und der Oberkante 16 ergebenden Spalt bearbeitet werden kann. Diese beschriebene und gezeigte Lage der Verbindungsebene 14 ist hinsichtlich der Bearbeitung besonders vorteilhaft, kann jedoch auch weiter in Richtung des Kolbenoberteiles 2 oder weiter in Richtung des Kolbenunterteils 3 liegen. Ergänzend ist in Figur 2 noch gezeigt, dass im Bereich der zurückgesetzten Flächen 10 ein abschnittsweiser Kragen 17 vorhanden ist, der etwa oberhalb der Bolzenbohrungen 11 seine größte radiale Erstreckung aufweist und im Verlauf in Richtung der Zylinderlaufflächen 9 in diese übergeht. Auf diese Art und Weise ergibt sich durch die Zylinderlaufflächen 9 und den Kragen 17 die umlaufende Oberkante 16. Um die Ausnehmung 8 zur Bildung des Kühlkanals zu verschließen, wird nun allseits in radialer Bewegungsrichtung B ein zumindest zweiteilig ausgebildetes Abdekkelement in den Spalt zwischen der Unterkante 15 und der Oberkante 16 eingedrückt, wozu das Abdeckelement 18 als Federelement mit insbesondere leicht bogenförmigen Querschnitt ausgebildet ist. Durch das Einsetzen des Abdeckelementes 18 in den erwähnten Spalt wird es dort festgeklemmt und somit in seiner Lage fixiert. Darüber hinaus kann es noch punktuell, abschnittsweise oder vollständig insbesondere durch eine Schweißverbindung mit dem Kolbenoberteil 2 und/oder dem Kolbenunterteil 3 unlösbar verbunden werden. Auch die Stoßpunkte der beiden Teile des Abdeckelementes 18 können auf entsprechende Art und Weise verschlossen werden.

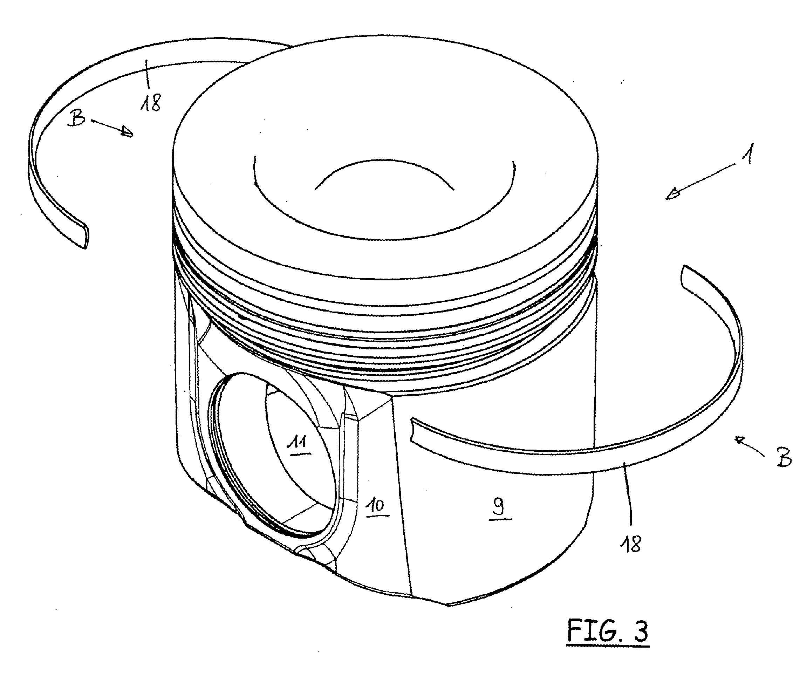

Figur 3 zeigt noch einmal den Kolben 1, wie er in den beiden Seitenansichten in Figur 1 und 2 dargestellt ist, in dreidimensionaler Ansicht, wobei sehr gut zu erkennen ist, dass die beiden Teile des Abdeckelementes 18 halbkreisförmig geformt sind und zum Verschluss der Ausnehmung 8 in den Spalt zwischen Unterkante 15 und Oberkante 16 in radialer Richtung eingedrückt werden.

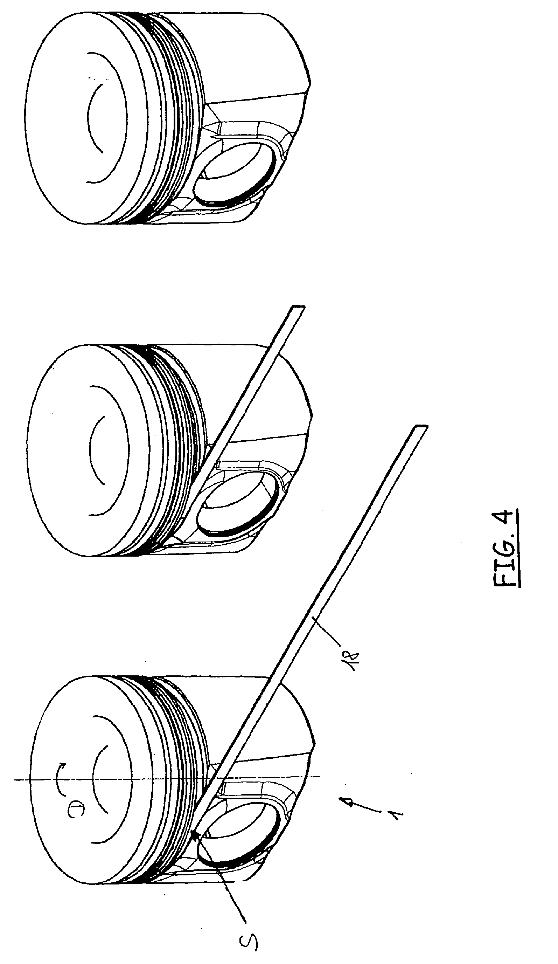

Figur 4 zeigt den Kolben 1, insbesondere in seiner Bauart gemäß den Figuren 1-3. Hier ist zu erkennen, dass das Abdeckelement als einteiliger Blechstreifen ausgebildet ist. Dieser Blechstreifen wird an einem Schaftpunkt S in dem Spalt zwischen Unterkante 15 und Oberkante 16 fixiert, insbesondere durch Punktschweißen. Anschließend erfolgt eine Drehbewegung D des Kolbens 1, so dass nach vollständiger Ausführung der Drehbewegung das streifenförmige Abdeckelement 18 den Spalt und damit die Ausnehmung 8 vollständig verschließt. Anschließend können noch die Enden des streifenförmigen Abdeckelementes 18 miteinander verbunden werden, genauso wie die Seitenkanten des Abdeckelementes 18 punktweise, abschnittsweise oder vollständig mit der Unterkante 15 und/oder der Oberkante 16 unlösbar miteinander verbunden werden können. An Stelle der Ausführung einer Drehbewegung D des Kolbens 1 ist es auch denkbar, das Abdeckelement 18 in Form einer Abrollbewegung in den Spalt einzudrücken. Um eine möglichst genaue Positionierung des Abdeckelementes 18 innerhalb des Spaltes zu gewährleisten, können zurückgesetzte punktuelle, abschnittsweise oder vollständig radial umlaufende Vorsprünge vorhanden sein, die an der Unterkante 15 und/oder der Oberkante 16 zurückversetzt angeordnet sind. Nach seiner Lagefixierung kann das Abdeckelement 18 bearbeitet werden, falls es über die Gesamtoberfläche des Kolbens 1 überstehen sollte. Wird es allerdings zurückversetzt in dem Spalt eingesetzt, ist eine Überarbeitung entbehrlich.

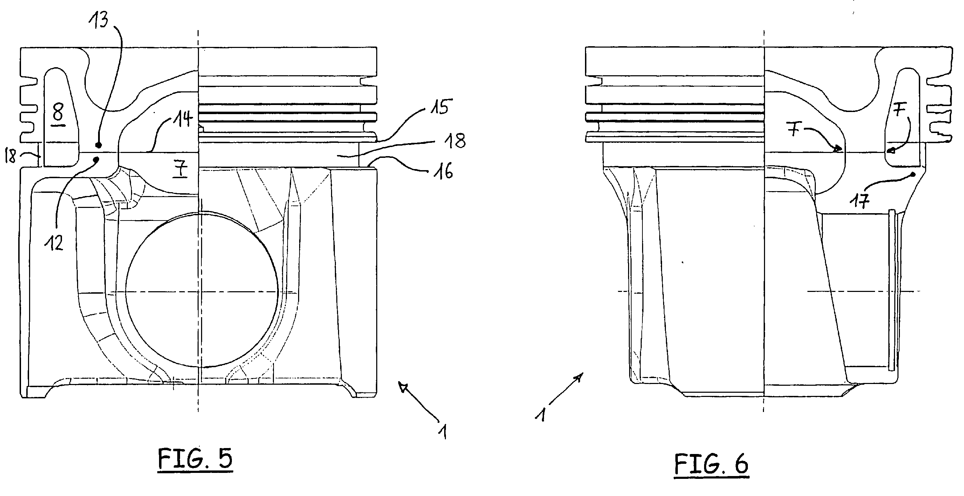

In den Figuren 5 und 6 ist wiederum die Bauart des Kolbens 1 gezeigt, wie sie schon in den Figuren 1 und 2 gezeigt und hierzu erläutert worden ist. Nachdem das Kolbenoberteil 2 mit dem Kolbenunterteil 3 verbunden worden ist, kann die sich ergebende Fügestelle F radial umlaufend bearbeitet, insbesondere abgedreht und gehärtet werden. Nach dieser Überarbeitung wird der sich bei dieser Bauform des Kolbens 1 ergebende Spalt zwischen der Unterkante 15 und der Oberkante 16 mit einem zumindest zweiteiligen, insbesondere einem zweiteiligen streifenförmigen Abdeckelement 18 verschlossen. Die zumindest beiden Teile des Abdeckelementes 18 sind schon halbkreisförmig vorgefertigt, so dass sie lediglich in den Spalt eingesetzt, auf Stoß gebracht und anschließend wieder punktweise, abschnittsweise oder vollständig umlaufend mit der Unterkante 15 und/oder der Oberkante 16 unlösbar verbunden werden können. Auch diese Ausführungsform hat wieder den Vorteil, dass die Fügestelle F sowohl von außen als auch von innen für den Bearbeitungsvorgang uneingeschränkt zur Verfügung steht, während auf Grund der Formgebung der Ausnehmung 8 im späteren Betrieb des Kolbens 1 eine ausreichend hohe Kühlleistung gewährleistet ist. Die Geometrie des Abdeckelementes 18 oder seiner Teile kann grundsätzlich bei allen verschiedenen Varianten so gewählt werden (insbesondere hinsichtlich der Dicke), dass im Falle einer beidseitigen unlösbaren Verbindung (obere und untere Kante geschweißt) das Abdeckelement Stützwirkung erzielt, die zu einer Erhöhung der Kolbenfestigkeit führt und somit Verformungen des Kolbens im Betrieb deutlich reduziert.

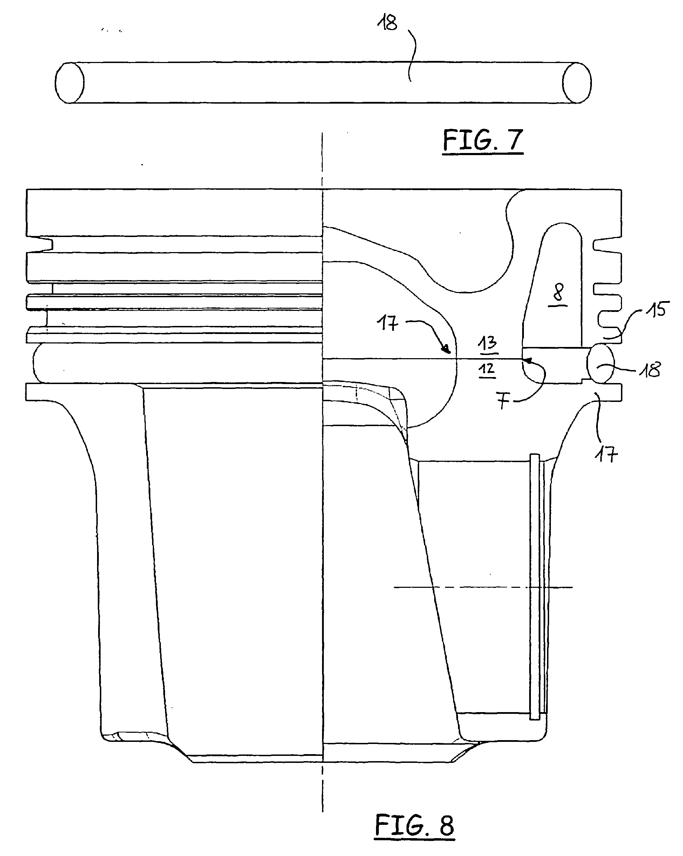

Figur 7 zeigt ein Abdeckelement 18, welches einteilig und elastisch verformbar ausgebildet ist.

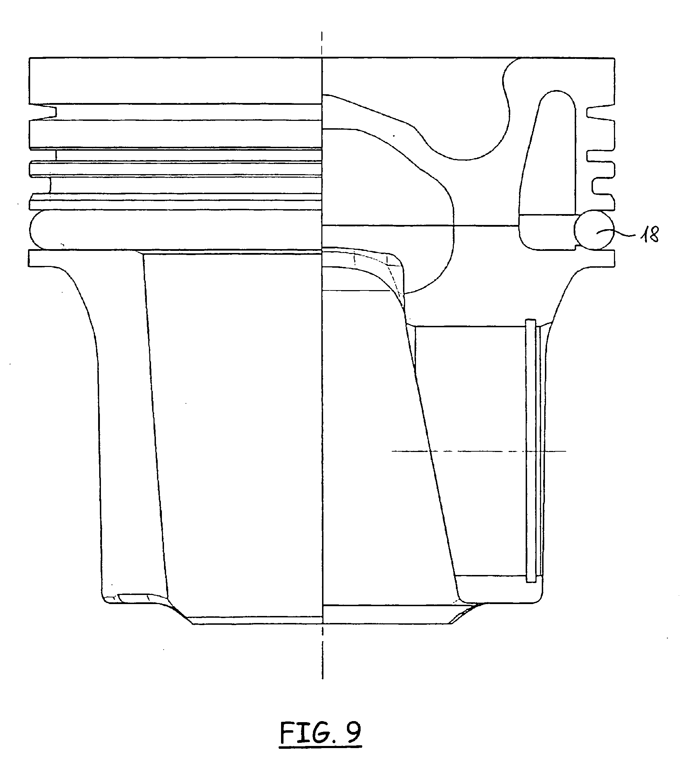

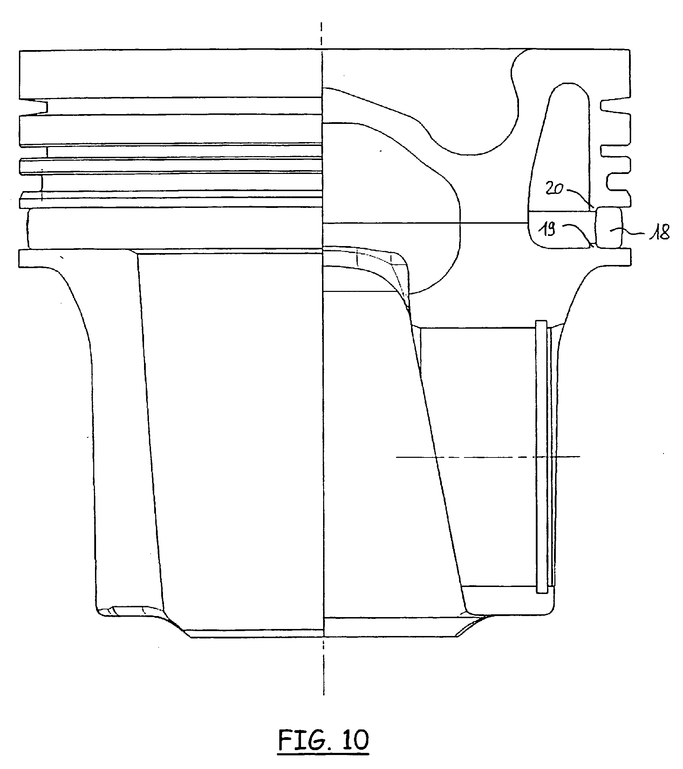

Die Figuren 8 - 10 zeigen Anwendungen des elastisch verformbaren Elementes 18 gemäß Figur 7, wobei erkennbar ist, dass das elastisch verformbare Abdeckelement 18 wieder in dem Bereich zwischen der Unterkante 15 und der Oberkante 16 eingesetzt wird. Hierzu weist das Abdeckelement 18 in seinem Ruhezustand einen Durchmesser auf, der weitestgehend dem Durchmesser entspricht, den das Abdekkelement 18 in der Position zwischen der Unterkante 15 und der Oberkante 16 aufnimmt. Um in diese Position zu gelangen, wird mit geeigneten Mitteln das elastisch verformbare Abdeckelement 18 so weit aufgeweitet, dass es über den Kolben 1 bis in seine endgültige Position geschoben werden kann. Um das elastisch verformbare Abdeckelement in seiner endgültigen Lage zu fixieren, ist die Kontur der Unterkante 15 und/oder die Kontur der Oberkante 16 der äußeren Kontur des Abdeckelementes 18 weitestgehend angepasst. Bei einem in etwa elliptisch-förmigen Abdeckelement 18, wie es in Figur 8 dargestellt ist, oder einem runden Abdeckelement 18, wie es beispielhaft in Figur 9 dargestellt ist, sind die entsprechenden Konturen der Unterkante 15 bzw. der Oberkante 16 in etwa zumindest teilweise hohlkehlenförmig. Ergänzend oder alternativ hierzu können auch an der Oberkante 16 zumindest teilweise oder vollständig radial umlaufende Vorsprünge 19, genauso wie Vorsprünge 20 an der Unterkante 15, vorgesehene werden. Diese sind insbesondere dann vorzusehen, wenn das Abdeckelement 18 einen wie in Figur 10 dargestellten in etwas eckigen, insbesondere rechteckigen oder quadratischen Querschnitt, gegebenenfalls mit abgerundeten Kanten, aufweist. Allerdings sind auch andere Querschnitte des Abdeckelementes 18, wie sie in den Figuren 8 - 10 dargestellt sind, denkbar. So sind auch mehreckige- oder auch prismenförmige Querschnitte gestaltbar.

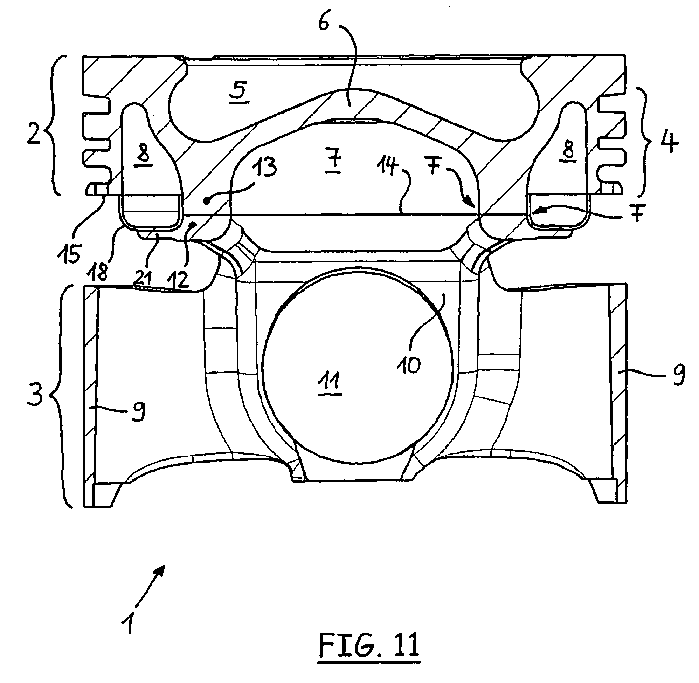

In den Figuren 11 - 15 ist ein Kolben 1 gezeigt, bei dem das Kolbenoberteil 2 etwa der Konstruktion der Kolbenoberteile entspricht, wie sie in den Figuren 1 - 10 zu erkennen sind. Abweichend von den Kolbenunterteilen, wie sie in den vorangegangenen Figuren gezeigt sind, weist das Kolbenunterteil 3 zwar wiederum die Zylinderlaufflächen 9 und die dazwischen liegenden zurückgesetzten Flächen 10 auf, wobei jetzt allerdings die Oberkante des Unterteils nicht von der Oberkante der Zylinderlaufflächen 9 bzw. des Kragens oberhalb der zurückgesetzten Flächen 10 gebildet wird, sondern von einem vollständig radial umlaufenden Kragen 21, der an dem Steg 12 des Kolbenunterteils 3 angeformt ist. Alternativ zu dem vollständig radial umlaufenden Kragen 21 kann dieser auch abschnittsweise vorhanden sein. Mit der Bauweise des Kolbens 1, wie sie in Figur 11 im Schnitt dargestellt ist, lässt sich eine besonders kompakte Bauweise des Kolbens 1, insbesondere ein besonders kurzer Schaftbereich, erzielen. In Figur 11 ist ein nicht erfindungsgemäßes Abdeckelement 18 dargestellt, welches U-förmig und zumindest zweiteilig ausgebildet ist, damit es in dem radial umlaufenden Spalt zwischen der Unterkante 15 und dem Kragen 21 eingesetzt werden kann. Dabei ist insbesondere die Kontur des Kragens 21 im Auflagebereich des Abdeckelementes 18 diesem angepasst. Wenn das Abdeckelement 18, wie in Figur 11 dargestellt ist, auch im Bereich der Verbindungsebene 14 und somit im Bereich der Fügestelle F an dem Kolben 1 (hier sowohl an dem Kolbenoberteil 2 als auch an dem Kolbenunterteil 3) zur Anlage kommt, erfolgt in vorteilhafter Weise die Bearbeitung der Fügestelle F derart, dass die Kontur der bearbeiteten Fügestelle F der Anlagekontur des Abdeckelementes 18 entspricht.

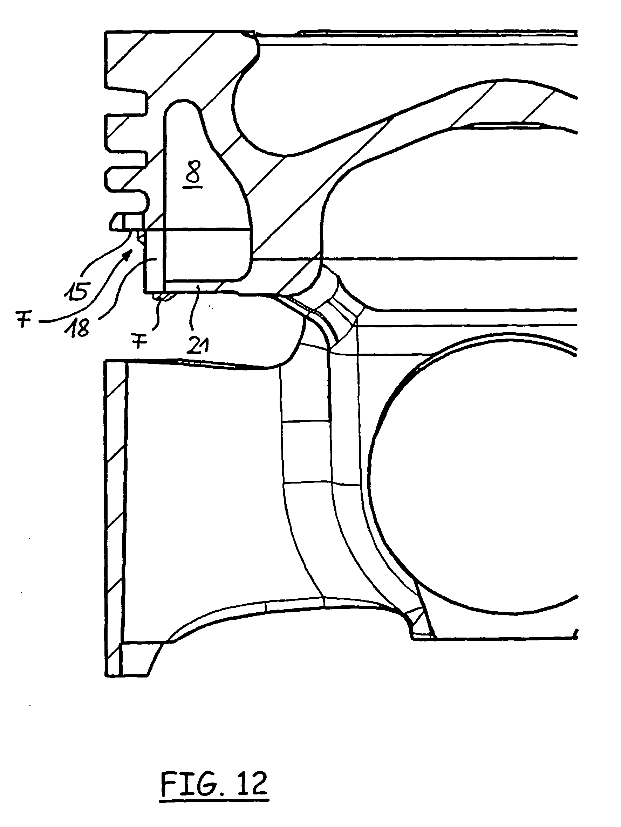

In Figur 12 ist gezeigt, dass das Abdeckelement 18 streifenförmig und mehrteilig ausgebildet ist. Hierbei kommen solche Ausführungsformen der Abdekkelemente 18 in Betracht, wie sie schon in den Figuren 4 - 6 beschrieben und erläutert worden sind. Ebenso ist erkennbar, dass das Abdeckelement 18 an der Unterkante 15 und/oder an dem Kragen 21 unlösbar, insbesondere verschweißt, wird. Weiterhin ist ersichtlich, dass das Abdeckelement 18 in seiner eingefügten Position gegenüber der äußeren Oberfläche des Kolbens 1 zurückversetzt angeordnet ist, so dass die Verbindungsstellen überarbeitet werden können, aber nicht müssen.

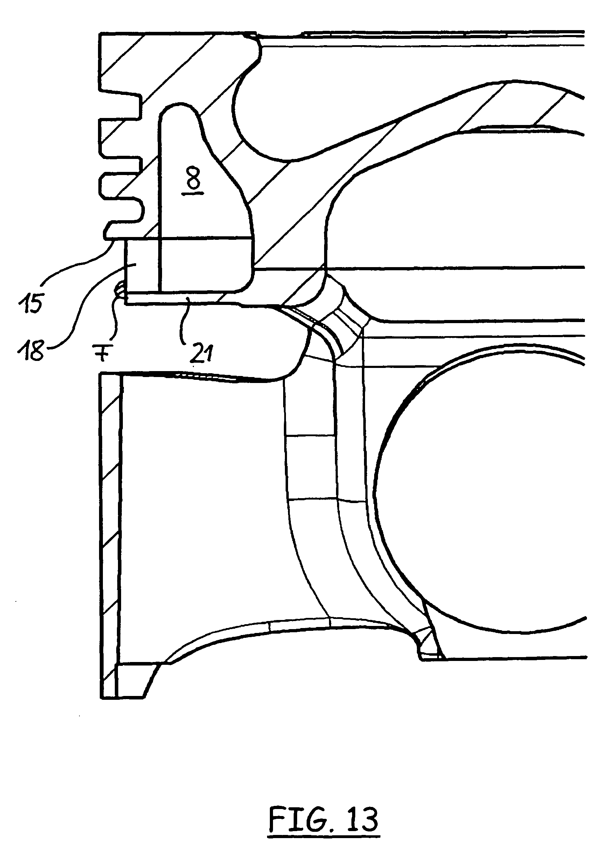

Figur 13 zeigt wieder ein zumindest zweiteiliges und insbesondere streifenförmiges Abdeckelement 18, welches wieder in einer Ausführungsform und Vorgehensweise zwischen der Unterkante 15 und dem Kragen 21 eingefügt werden kann, wie dies schon in den Figuren 1 - 3 bzw. den Figuren 5 und 6 gezeigt und erläutert worden ist. Allerdings gestattet es diese in Figur 13 gezeigte Ausführungsform auch, ein streifenförmiges und einteiliges Abdeckelement 18 einzusetzen, das dann, wie in Figur 4 gezeigt, zwischen die Unterkante 15 und den Kragen 21 eingebracht wird.

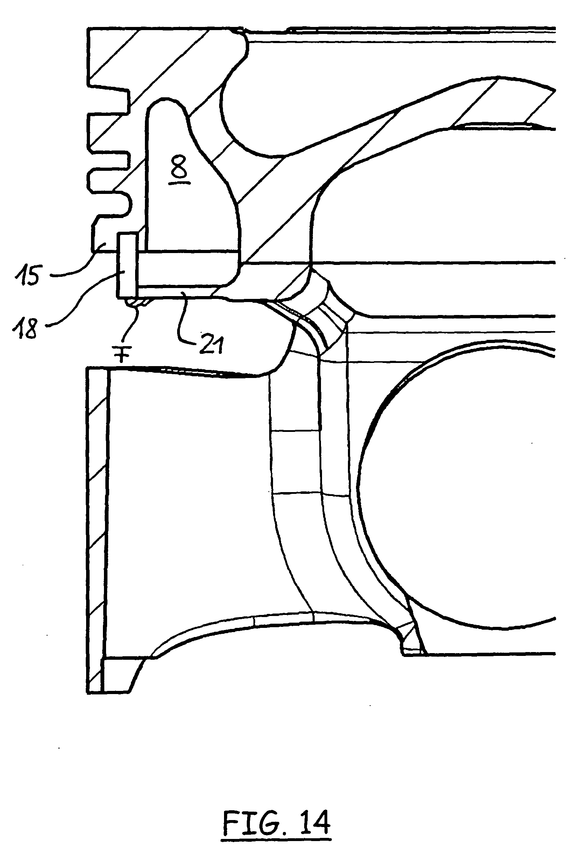

Figur 14 zeigt eine Ausführungsform, bei der die Unterkante 15 des Ringfeldes 4 eine in Richtung des Kolbenunterteils 3 weisende Nut zur Lagefixierung des Abdeckelementes 18 aufweist. Auch hierbei ist das Abdeckelement 18 wieder mehrteilig ausgestaltet und weist eine Streifenform auf. Zur Lagefixierung wird das Abdeckelement 18 in die Nut in die Unterkante 15 eingedrückt und dort an der Unterkante 15 und/oder an der Stoßkante des Kragens 21 verschweißt. Ergänzend oder alternativ hierzu ist es im Falle eines mehrteiligen Abdeckelementes 18 denkbar, dass auch der Kragen eine in Richtung des Kolbenoberteils 2 weisende Nut zur Lagefixierung des Abdeckelementes 18 aufweist. Ebenso ist es denkbar, dass die Nut sowohl in der Unterkante 15 als auch in dem Kragen 21 vorhanden ist, wobei dann von außen derart ein Einstich in Richtung der Nuten erfolgt, so dass dort ein mehrteiliges und streifenförmiges Abdeckelement 18 eingeschoben werden kann.

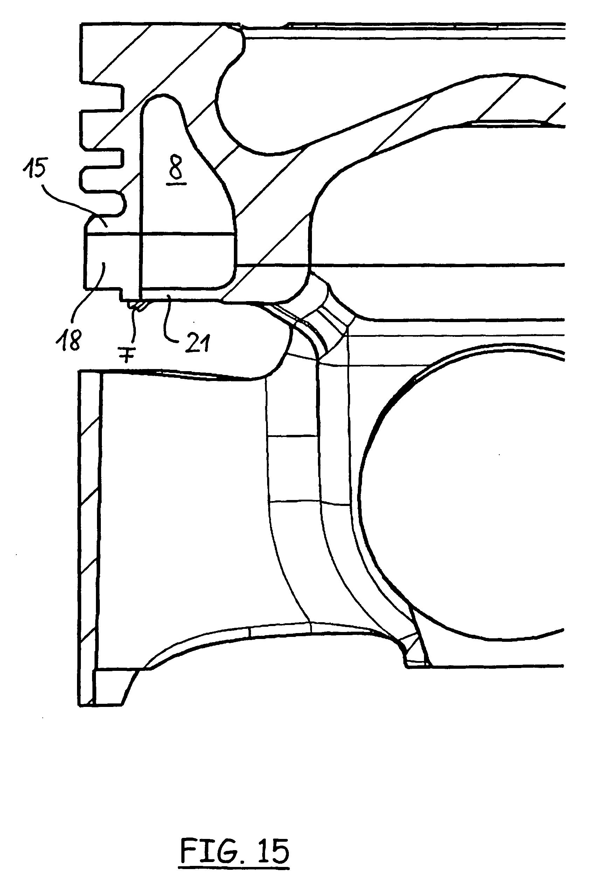

Figur 15 zeigt eine Ausführungsform des Kolbens 1, bei dem ein mehrteiliges Abdeckelement 18 an der Unterkante 15 und an dem Kragen 21 angeformt ist. Dabei ist der Durchmesser des Abdeckelementes 18 in seiner endgültigen Position zum Verschließen der Ausnehmung 8 so gewählt, dass er mit dem Durchmesser der übrigen Kolbenoberfläche abschließt oder gegebenenfalls etwas übersteht, so dass zur Anpassung eine Überarbeitung erforderlich ist.

An dieser Stelle sei noch erwähnt, dass das Abdeckelement, welches bei dem Kolben 1 eingesetzt wird, wie er in den Figuren 12 - 14 dargestellt ist, auch das elastisch verformbare Abdeckelement gemäß den Figuren 8 - 10 sein kann. Es wird dann einteilig und elastisch verformbar ausgebildet.

### Bezugszeichenliste

- 1: Kolben
- 2: Kolbenoberteil
- 3: Kolbenunterteil
- 4: Ringfeld
- 5: Brennraummulde
- 6: gewölbte Ebene
- 7: Innenbereich
- 8: Ausnehmung
- 9: Zylinderlauffläche
- 10: zurückgesetzte Fläche
- 11: Bolzenbohrung
- 12: Steg
- 13: Steg
- 14: Verbindungsebene
- 15: Unterkante des Ringfeldes
- 16: Oberkante des Unterteils
- 17: abschnittsweiser Kragen
- 18: Abdeckelement
- 19: Vorsprung
- 20: umlaufender
- 21: umlaufender Kragen

- B:: Bewegungsrichtung
- D:: Drehbewegung
- S:: Startpunkt
- F:: Fügestelle

## Patentansprüche

1. Kolben (1) für eine Brennkraftmaschine, bestehend aus einem ein Ringfeld (4) und eine umlaufende Ausnehmung (8) aufweisenden Kolbenoberteil (2) und einem Zylinderlaufflächen (9) und Bolzenbohrungen (11) aufweisenden Kolbenunterteil (3), wobei das Kolbenoberteil (2) und das Kolbenunterteil (3) in einem Fügeverfahren miteinander verbunden werden und die dabei entstehende Fügestelle (F) bearbeitet wird und anschließend die Ausnehmung (8) mit einem Abdeckelement (18) zur Bildung eines Kühlkanals verschlossen wird, wobei das Abdeckelement (18) zumindest zweiteilig und als Federelement ausgebildet ist, das zum Verschluss der Ausnehmung (8) in dem Kolben (1) eingeklemmt wird, **dadurch gekennzeichnet, dass** das Abdeckelement (18) streifenförmig ausgebildet ist und nach dem Einklemmvorgang zwischen der unteren Kante des Kolbenoberteiles (2) und der oberen Kante des Kolbenunterteiles (3) angeordnet ist, wobei das Abdeckelement (18) axial zu der Kolbenhubachse ausgerichtet ist.

2. Verfahren zur Herstellung eines Kolbens (1) für eine Brennkraftmaschine, bestehend aus einem ein Ringfeld (4) und eine umlaufende Ausnehmung (8) aufweisenden Kolbenoberteil (2) und einem Zylinderlaufflächen (9) und Bolzenbohrungen (11) aufweisenden Kolbenunterteil (3), wobei das Kolbenoberteil (2) und das Kolbenunterteil (3) in einem Fügeverfahren miteinander verbunden werden und die dabei entstehende Fügestelle (F) bearbeitet wird und anschließend die Ausnehmung (8) mit einem Abdeckelement (18) zur Bildung eines Kühlkanals verschlossen wird, **dadurch gekennzeichnet, dass** das Abdeckelement (18) als einteiliger Blechstreifen ausgebildet ist, der an seinem Startpunkt (S) am Kolben (1) fixiert und dann mittels einer Drehbewegung (D) zum Verschluss der Ausnehmung (8) abgewickelt wird.

3. Verfahren nach Anspruch 2, **dadurch gekennzeichnet, dass** der Blechstreifen an seinem Stoßpunkt und/oder zumindest teilweise am Kolben (1) unlösbar verbunden wird.

4. Verfahren zur Herstellung eines Kolbens (1) für eine Brennkraftmaschine, bestehend aus einem ein Ringfeld (4) und eine umlaufende Ausnehmung (8) aufweisenden Kolbenoberteil (2) und einem Zylinderlaufflächen (9) und Bolzenbohrungen (11) aufweisenden Kolbenunterteil (3), wobei das Kolbenoberteil (2) und das Kolbenunterteil (3) in einem Fügeverfahren miteinander verbunden werden und die dabei entstehende Fügestelle (F) bearbeitet wird und anschließend die Ausnehmung (8) mit einem Abdeckelement (18) zur Bildung eines Kühlkanals verschlossen wird, **dadurch gekennzeichnet, dass** das Abdeckelement (18) zumindest zweiteilig und streifenförmig ausgebildet ist, wobei die zumindest zwei Teile des Abdeckelementes (18) von außen zwischen der unteren Kante des Kolbenoberteiles (2) und der oberen Kante des Kolbenunterteiles (3) an dem Kolben (1) angefügt werden.

5. Verfahren zur Herstellung eines Kolbens (1) für eine Brennkraftmaschine, bestehend aus einem ein Ringfeld (4) und eine umlaufende Ausnehmung (8) aufweisenden Kolbenoberteil (2) und einem Zylinderlaufflächen (9) und Bolzenbohrungen (11) aufweisenden Kolbenunterteil (3), wobei das Kolbenoberteil (2) und das Kolbenunterteil (3) in einem Fügeverfahren miteinander verbunden werden und die dabei entstehende Fügestelle (F) bearbeitet wird und anschließend die Ausnehmung (8) mit einem Abdeckelement (18) zur Bildung eines Kühlkanals verschlossen wird, **dadurch gekennzeichnet, dass** das Abdeckelement (18) einteilig und elastisch verformbar ausgebildet ist, so dass es durch Aufweitung über den Kolben (1) bewegt und durch anschließendes Zusammenziehen zum Verschluss der Ausnehmung (8) am Kolben (1) lagefixiert wird.

6. Vefahren zur Herstellung eines Kolbens (1) nach Anspruch 5, **dadurch gekennzeichnet, dass** das Kolbenoberteil (2) und/oder das Kolbenunterteil (3) zur Aufnahme des elastisch verformbaren Abdekkelementes (18) in der Position, in der es die Ausnehmung (8) verschließt, an die äußere Kontur des Abdeckelementes (18) angepasst ist/sind.

7. Vefahren zur Herstellung eines Kolbens (1) nach Anspruch 5 oder 6, **dadurch gekennzeichnet, dass** das Kolbenoberteil (2) und/oder das Kolbenunterteil (3) einen Vorsprung (19) und/oder einen Vorsprung (20) zur Lagepositionierung des elastisch verformbaren Abdeckelementes (18) aufweist.

8. Vefahren zur Herstellung eines Kolbens (1) nach einem der Ansprüche 2 bis 7, **gekennzeichnet durch** das die Zylinderlaufflächen (9) sowie dagegen zurückgesetzte Flächen (10), die die Bolzenbohrung (11) beinhalten, aufweisende Kolbenunterteil (3), wobei das Kolbenoberteil (2) einen radial umlaufenden und in Richtung des Kolbenunterteils (3) weisenden Steg (13) und das Kolbenunterteil (3) einen radial umlaufenden und in Richtung des Kolbenoberteils (2) weisenden Steg (12) aufweist und das Kolbenoberteil (2) über seinen Steg (13) mit dem Kolbenunterteil (3) über seinen Steg (12) zusammengefügt wird, wobei der Steg (12) des Unterteils einen radial nach außen gerichteten Kragen (21) aufweist und das Abdeckelement (18) zwischen dem Kragen (21) und einer Unterkante (15) des Ringfeldes (4) zum Verschluss der Ausnehmung (8) eingefügt wird.

9. Vefahren zur Herstellung eines Kolbens (1) nach Anspruch 8, **dadurch gekennzeichnet, dass** der Kragen (21) eine in Richtung des Kolbenoberteils (2) und/oder die Unterkante (15) des Ringfeldes (4) eine in Richtung des Kolbenunterteils (3) weisende Nut zur Lagefixierung des Abdeckelementes (18) aufweist.

10. Verfahren zur Herstellung eines Kolbens (1) nach einem der vorhergehenden Ansprüche 2 bis 9, **dadurch gekennzeichnet, dass** das Abdeckelement (18) eine nach außen gerichtete Fläche zur Führung des Kolbens (1) aufweist.

## Claims

1. Piston (1) for an internal combustion engine, consisting of a piston upper part (2) comprising a ring zone (4) and a circumferential recess (8) and a piston lower part (3) comprising cylinder faces (9) and pin bores (11), the piston upper part (2) and the piston lower part (3) being connected together using a joining technique and the resultant join site (F) being machined and then the recess (8) being closed with a covering element (18) to form a cooling channel, the covering element (18) being of at least two-part construction and taking the form of a spring element, which is wedged in the piston (1) to close the recess (8), **characterized in that** the covering element (18) is of strip-shaped construction and is arranged, after the wedging-in process, between the lower edge of the piston upper part (2) and the upper edge of the piston lower part (3), the covering element (18) being oriented axially relative to the piston stroke axis.

2. Method of producing a piston (1) for an internal combustion engine, consisting of a piston upper part (2) comprising a ring zone (4) and a circumferential recess (8) and a piston lower part (3) comprising cylinder faces (9) and pin bores (11), the piston upper part (2) and the piston lower part (3) being connected together using a joining technique and the resultant join site (F) being machined and then the recess (8) being closed with a covering element (18) to form a cooling channel, **characterized in that** the covering element (18) takes the form of a one-piece sheet metal strip, which is fixed to the piston (1) at its starting point (S) and is then wound round by means of a turning movement (D) to close off the recess (8).

3. Method according to Claim 2, **characterized in that** the sheet metal strip is connected permanently at its abutment point and/or at least in places to the piston (1).

4. Method of producing a piston (1) for an internal combustion engine, consisting of a piston upper part (2) comprising a ring zone (4) and a circumferential recess (8) and a piston lower part (3) comprising cylinder faces (9) and pin bores (11), the piston upper part (2) and the piston lower part (3) being connected together using a joining technique and the resultant join site (F) being machined and then the recess (8) being closed with a covering element (18) to form a cooling channel, **characterized in that** the covering element (18) is of at least two-part, strip-shaped construction, the at least two parts of the covering element (18) being attached to the piston (1) from the outside between the lower edge of the piston upper part (2) and the upper edge of the piston lower part (3).

5. Method of producing a piston (1) for an internal combustion engine, consisting of a piston upper part (2) comprising a ring zone (4) and a circumferential recess (8) and a piston lower part (3) comprising cylinder faces (9) and pin bores (11), the piston upper part (2) and the piston lower part (3) being connected together using a joining technique and the resultant join site (F) being machined and then the recess (8) being closed with a covering element (18) to form a cooling channel, **characterized in that** the covering element (18) is of one-piece, resiliently deformable construction, such that it moves over the piston (1) by expansion and is fixed in position on the piston (1) by subsequent contraction so as to close the recess (8).

6. Method of producing a piston (1) according to Claim 5, **characterized in that** the piston upper part (2) and/or the piston lower part (3) is/are conformed to the outer contour of the covering element (18) so as to accommodate the resiliently deformable covering element (18) in the position in which it closes the recess (8).

7. Method of producing a piston (1) according to Claim 5 or 6, **characterized in that** the piston upper part (2) and/or the piston lower part (3) comprise(s) a projection (19) and/or a projection (20) for positioning the resiliently deformable covering element (18).

8. Method of producing a piston (1) according to one of Claims 2 to 7, **characterized by** the piston lower part (3) comprising the cylinder faces (9) and areas (10) set back relative thereto, which areas contain the pin bore (11), the piston upper part (2) comprising a radially circumferential web (13) directed towards the piston lower part (3) and the piston lower part (3) comprising a radially circumferential web (12) directed towards the piston upper part (2) and the piston upper part (2) being joined together via its web (13) with the piston lower part (3) via its web (12), the web (12) of the lower part comprising a radially outwardly directed collar (21) and the covering element (18) being inserted between the collar (21) and a lower edge (15) of the ring zone (4) to close the recess (8).

9. Method of producing a piston (1) according to Claim 8, **characterized in that** the collar (21) comprises a groove directed towards the piston upper part (2) and/or the lower edge (15) of the ring zone (4) comprises a groove directed towards the piston lower part (3) for fixing the covering element (18) in position.

10. Method of producing a piston (1) according to one of the preceding Claims 2 to 9, **characterized in that** the covering element (18) comprises an outwardly directed face for guiding the piston (1).

## Revendications

1. Piston (1) pour un moteur à combustion interne, constitué d'une partie supérieure de piston (2) présentant un champ annulaire (4) et un évidement (8) périphérique, et d'une partie inférieure de piston (3) présentant des surfaces de roulement de cylindre (9) et des alésages de boulons (11), la partie supérieure de piston (2) et la partie inférieure de piston (3) étant connectées l'une à l'autre dans un procédé d'assemblage, et le joint (F) en résultant étant usiné puis l'évidement (8) étant fermé avec un élément de recouvrement (18) pour former un canal de refroidissement, l'élément de recouvrement (18) étant réalisé au moins en deux parties et sous forme d'élément de ressort, qui est serré dans le piston (1) pour fermer l'évidement (8), **caractérisé en ce que** l'élément de recouvrement (18) est réalisé en forme de bande et est disposé, après l'opération de serrage, entre le bord inférieur de la partie supérieure de piston (2) et le bord supérieur de la partie inférieure de piston (3), l'élément de recouvrement (18) étant orienté axialement par rapport à l'axe de la course du piston.

2. Procédé de fabrication d'un piston (1) pour un moteur à combustion interne, constitué d'une partie supérieure de piston (2) présentant un champ annulaire (4) et un évidement (8) périphérique, et d'une partie inférieure de piston (3) présentant des surfaces de roulement de cylindre (9) et des alésages de boulons (11), la partie supérieure de piston (2) et la partie inférieure de piston (3) étant connectées l'une à l'autre dans un procédé d'assemblage, et le joint (F) en résultant étant usiné puis l'évidement (8) étant fermé avec un élément de recouvrement (18) pour former un canal de refroidissement, **caractérisé en ce que** l'élément de recouvrement (18) est réalisé sous la forme d'un ruban de tôle d'une seule pièce qui est fixé sur le piston (1) au niveau de son point de départ (S) et qui est enroulé ensuite au moyen d'un mouvement de rotation (D) pour fermer l'évidement (8).

3. Procédé selon la revendication 2, **caractérisé en ce que** le ruban de tôle est connecté de manière imperdable au niveau de son point d'aboutement et/ou au moins en partie au piston (1).

4. Procédé de fabrication d'un piston (1) pour un moteur à combustion interne constitué d'une partie supérieure de piston (2) présentant un champ annulaire (4) et un évidement (8) périphérique, et d'une partie inférieure de piston (3) présentant des surfaces de roulement de cylindre (9) et des alésages de boulons (11), la partie supérieure de piston (2) et la partie inférieure de piston (3) étant connectées l'une à l'autre dans un procédé d'assemblage, et le joint (F) en résultant étant usiné puis l'évidement (8) étant fermé avec un élément de recouvrement (18) pour former un canal de refroidissement, **caractérisé en ce que** l'élément de recouvrement (18) est réalisé au moins en deux parties et en forme de ruban, les au moins deux parties de l'élément de recouvrement (18) étant assemblées depuis l'extérieur entre le bord inférieur de la partie supérieure de piston (2) et le bord supérieur de la partie inférieure de piston (3) sur le piston (1).

5. Procédé de fabrication d'un piston (1) pour un moteur à combustion interne, constitué d'une partie supérieure de piston (2) présentant un champ annulaire (4) et un évidement (8) périphérique, et d'une partie inférieure de piston (3) présentant des surfaces de roulement de cylindre (9) et des alésages de boulons (11), la partie supérieure de piston (2) et la partie inférieure de piston (3) étant connectées l'une à l'autre dans un procédé d'assemblage, et le joint (F) en résultant étant usiné puis l'évidement (8) étant fermé avec un élément de recouvrement (18) pour former un canal de refroidissement, **caractérisé en ce que** l'élément de recouvrement (18) est réalisé d'une seule pièce et de manière déformable élastiquement, de sorte qu'il se déplace par élargissement par-dessus le piston (1) et qu'il soit fixé en position sur le piston (1) par assemblage subséquent pour fermer l'évidement (8).

6. Procédé de fabrication d'un piston (1) selon la revendication 5, **caractérisé en ce que** la partie supérieure de piston (2) et/ou la partie inférieure de piston (3) sont adaptées au contour extérieur de l'élément de recouvrement (18) pour recevoir l'élément de recouvrement (18) déformable élastiquement, dans la position dans laquelle il ferme l'évidement (8).

7. Procédé de fabrication d'un piston (1) selon la revendication 5 ou 6, **caractérisé en ce que** la partie supérieure de piston (2) et/ou la partie inférieure de piston (3) présentent une saillie (19) et/ou une saillie (20) pour le positionnement de l'élément de recouvrement déformable élastiquement (18).

8. Procédé de fabrication d'un piston (1) selon l'une quelconque des revendications 2 à 7, **caractérisé en ce que** la partie inférieure de piston (3) présente les surfaces de roulement de cylindre (9) ainsi que des surfaces (10) en retrait par rapport à celles-ci, qui contiennent l'alésage de boulon (11), la partie supérieure de piston (2) présentant une nervure (13) radialement périphérique et tournée dans la direction de la partie inférieure de piston (3), et la partie inférieure de piston (3) présentant une nervure (12) radialement périphérique et tournée dans la direction de la partie supérieure de piston (2), et la partie supérieure de piston (2) étant assemblée par le biais de sa nervure (13) à la partie inférieure de piston (3) par le biais de sa nervure (12), la nervure (12) de la partie inférieure présentant un rebord (21) orienté radialement vers l'extérieur et l'élément de recouvrement (18) étant introduit entre le rebord (21) et un bord inférieur (15) du champ annulaire (4) pour fermer l'évidement (8).

9. Procédé de fabrication d'un piston (1) selon la revendication 8, **caractérisé en ce que** le rebord (21) présente une rainure tournée dans la direction de la partie supérieure de piston (2) et/ou le bord inférieur (15) du champ annulaire (4) présente une rainure tournée dans la direction de la partie inférieure de piston (3), pour la fixation en position de l'élément de recouvrement (18).

10. Procédé de fabrication d'un piston (1) selon l'une quelconque des revendications précédentes 2 à 9, **caractérisé en ce que** l'élément de recouvrement (18) présente une surface orientée vers l'extérieur pour guider le piston (1).
